# EUROPÄISCHE PATENTSCHRIFT

(11) **EP 2 665 281 B1**
(45) Veröffentlichungstag und Bekanntmachung des Hinweises auf die Patenterteilung: **08.04.2015**
(21) Anmeldenummer: 13168284.1
(22) Anmeldetag: 17.05.2013
(51) Int. Cl.: H04N 17/00, H04N 5/33

(54) **Verfahren und Vorrichtung zum Abgleich von Wärmebildkameras**
Method and device for the adjustment of thermal image cameras
Procédé et dispositif de synchronisation de caméras thermiques

(30) Priorität: 18.05.2012 DE 102012208366
(43) Veröffentlichungstag der Anmeldung: 20.11.2013
(73) Patentinhaber: ESG Elektroniksystem- und Logistik-GmbH, 82256 Fürstenfeldbruck (DE)
(72) Erfinder: Mönikes, Ralf, 81245 München (DE)
(74) Vertreter: Betten & Resch

(56) Entgegenhaltungen:
- WO-A1-2011/135060
- US-A1- 2004 065 822

## Beschreibung

Die Erfindung betrifft eine Vorrichtung und ein Verfahren zum Abgleich von Wärmebildkameras.

Es ist daher eine Aufgabe der Erfindung, ein Verfahren und eine Vorrichtung zum Abgleich von Wärmebildkameras zu schaffen, dass ohne die Nachteile des geschilderten Stands der Technik auskommt.

Wärmebildkameras, d.h. Kameras die im infraroten Frequenzbereich Bilder aufnehmen, sind ein häufiger Bestandteil von Fluggeräten, beispielsweise von zivilen oder militärischen Hubschraubern, und werden zur Flugführung, insbesondere im Nachtflug, eingesetzt. Wird eine Wärmebildkamera zur Flugführung im Nachtflug eingesetzt, so sollte diese natürlich möglichst nicht ausfallen. Aus Sicherheitsgründen können daher auch zwei Wärmebildkameras in einem Fluggerät vorgesehen sein.

Die Kamera oder die Kameras sind in der Regel in einer Halterung montiert, oft so, dass die Kamera(s) dreh- und schwenkbar sind, um unterschiedliche Sichtfelder erfassen zu können.

Unabhängig von der Zahl der vorhandenen Wärmebildkameras müssen diese für eine optimale Funktionalität abgeglichen oder kalibriert werden. Hierzu wird ein kaltes und ein warmes Referenzbild einer Fläche mit homogener Temperaturverteilung aufgenommen. Dies wird bewerkstelligt indem die kühl- und beheizbare Fläche eines Kalibrierstrahlers in das Sichtfeld der Wärmebildkamera gebracht wird, beispielsweise indem entweder die Kamera mit ihrem Objektiv mittels eines Schwenkmechanismus so bewegt wird, dass die Kamera ein Bild des Kalibrierstrahlers aufnimmt. Alternativ dazu kann der Kalibrierstrahler vor das Objektiv der Wärmebildkamera geschwenkt oder bewegt werden.

In bisherigen Vorrichtungen zur Kalibrierung wird dabei der Kalibrierstrahler zunächst mit der wärmeren Temperatur betrieben, um ein Bild aufzunehmen. Anschließend wird der Kalibrierstrahler gekühlt, um das Bild mit der kälteren Temperatur aufzunehmen. Alternativ dazu kann zuerst das Bild des gekühlten Kalibrierstrahlers aufgenommen werden, der anschließend erwärmt wird.

Unabhängig von der gewählten Alternative ist in jedem Fall eine gewisse Zeit erforderlich, um den Kalibrierstrahler zu heizen oder zu kühlen, bis der Kalibriervorgang vollständig durchgeführt werden kann. Während dieser Zeit kann die Wärmebildkamera nicht genutzt werden

In US 2004/ 0065822 A1 ist eine Kalibrierungsanordnung mit einem thermoelektrischen Kühler beschrieben, welcher eine Kalibrierungstemperatur für eine Kalibrierungsplatte und eine andere Kalibrierungstemperatur für eine zweite Kalibrierungsplatte bereitstellt. Eine der beiden Kalibrierungsplatten ist sofort verfügbar und kann in den optischen Pfad geführt werden, wenn die Kalibrierung der thermischen Abbildungsvorrichtung erforderlich ist. Folglich wird die erforderliche Zeit, um eine thermische Abbildungsvorrichtung in einem Thermoabbildungssystem zu kalibrieren, stark reduziert.

WO 2011/135060 A betrifft ein System und Verfahren zum Erfassen widrigen atmosphärischen Bedingungen vor einem Flugzeug. Das System weist mehrere Infrarotkameras auf, um Infrarotstrahlung in verschiedenen Bänden des Infrarotlichts räumlich zu erfassen. Jede Kamera ist mit einem Bildverarbeitungsrechner verbunden, der Bilder verarbeitet und kombiniert Video-Anzeigesignale für eine Videoanzeige erzeugt, welche die Position der widrigen atmosphärischen Bedingungen in Bezug auf das Flugzeug angibt.

Es ist daher eine Aufgabe der vorliegenden Erfindung, eine verbesserte Vorrichtung bzw. eine Verfahren zu schaffen, dass diesen Nachteil des Standes der Technik vermeidet und eine zügigere Kalibrierung ermöglicht.

Diese Aufgabe wird erfindungsgemäß durch eine Vorrichtung mit den Merkmalen des Anspruchs 1 und durch ein Verfahren mit den Merkmalen von Anspruch 7 gelöst.

Gemäß einem ersten Ausführungsbeispiel wird eine Vorrichtung zum Abgleich mindestens einer Wärmebildkamera geschaffen, wobei die Vorrichtung aufweist: Einen ersten und einen zweiten Kalibrierstrahler, die so ausgebildet sind, dass sie gleichzeitig auf unterschiedliche Temperaturen gebracht werden können, ein Befestigungsmodul, um die mindestens eine Wärmebildkamera an der Vorrichtung beweglich zu befestigen, wobei das Befestigungsmodul so zur beweglichen Befestigung der Kamera derart ausgebildet ist, dass es ermöglicht, dass die Kamera zunächst auf den ersten und dann auf den zweiten Kalibrierstrahler ausgerichtet wird, um jeweils ein Bild der auf unterschiedliche Temperatur gebrachten Temperaturstrahler zum Abgleich der Wärmebildkamera aufzunehmen.

Durch das Vorsehen zweier Kalibrierstrahler, die auf unterschiedliche Temperaturen gebracht werden können, sowie durch die bewegliche Befestigung der mindestens einen Wärmebildkamera derart, dass sie nacheinander auf die beiden auf unterschiedliche Temperatur gebrachten Wärmestrahler ausgerichtet werden kann, ist es möglich, die für die Kalibrierung erforderliche Zeit drastisch zu verkürzen, da nicht gewartet werden muss, bis ein Wärmestrahler die für die Kalibrierung erforderlichen zwei unterschiedlichen Temperaturen erreicht hat.

Gemäß einem ersten Ausführungsbeispiel weist die Vorrichtung ferner auf: ein Heizungs- und/oder ein Kühlmodul für mindestens einen, vorzugsweise für jeden der ersten und zweiten Kalibrierstrahler, um die Kalibrierstrahler auf die für die Kalibrierung gewünschten unterschiedlichen Temperaturen zu bringen.

Das Vorsehen eines Heizmoduls ermöglicht die Erwärmung eines Kalibrierstrahlers, das Vorsehen eines Kühlmoduls das Kühlen. Ist für den ersten Kalibrierstrahler z. B. ein Heizmodul vorgesehen und für den zweiten ein Kühlmodul, so kann der erste Kalibrierstrahler auf eine gewünschte Temperatur erwärmt werden, der zweite auf eine gewünschte Temperatur gekühlt werden. Auf diese Weise können dann sequentiell Bilder eines erwärmten sowie eines gekühlten Kalibrierstrahlers von der Wärmebildkamera aufgenommen werden, ohne die im Falle eines einzigen Kalibrierstrahlers erforderliche Zeit für die Erwärmung und Abkühlung abzuwarten. Gemäß einem Ausführungsbeispiel können auch für beide Kalibrierstrahler jeweils ein Heiz- und ein Kühlmodul oder ein kombiniertes Heiz- und Kühlmodul vorgesehen sein.

Gemäß einem Ausführungsbeispiel ist das Befestigungsmodul als azimutale Montierung ausgebildet.

Dies ermöglicht eine besonders vorteilhafte Implementierung der beweglichen Montierbarkeit der Kamera(s), um ihre (sequentielle) Ausrichtung auf die beiden Kalibrierstrahler zu ermöglichen.

Gemäß einem Ausführungsbeispiel ist das Befestigungsmodul so ausgebildet, dass eine erste und eine zweite Kamera beweglich an der Vorrichtung befestigbar sind dann derart beweglich befestigt sind, dass die erste Kamera auf den ersten Kalibrierstrahler ausrichtbar ist während gleichzeitig die zweite Kamera auf den zweiten Kalibrierstrahler ausrichtbar ist, sowie ferner derart befestigt sind, dass die erste Kamera auf den zweiten Kalibrierstrahler ausrichtbar ist, während gleichzeitig die zweite Kamera auf den ersten Kalibrierstrahler ausrichtbar ist.

Auf diese Weise können gleichzeitig zwei Wärmebildkameras an der Vorrichtung montiert werden, wobei für beide gleichzeitig eine schnelle Kalibrierung durchführbar ist, die die für die Kalibrierung einer einzigen Wärmebildkamera erforderliche Zeit nicht übersteigt.

Gemäß einem Ausführungsbeispiel weist die Vorrichtung ferner auf:
Ein Steuerungsmodul zur Steuerung der Temperatur des ersten und des zweiten Kalibrierstrahlers, wobei das Steuerungsmodul so ausgebildet ist, dass es den ersten und den zweiten Kalibrierstrahler so ansteuert, dass diese unterschiedliche Temperaturen aufweisen.

Auf diese Weise kann dann der Kalibrierungsvorgang automatisch durchgeführt werden.

Ferner können gemäß einem Ausführungsbeispiel die Heiz- oder Kühlmodule auch als computergesteuerte Module implementiert sein, die gemäß einem vorgegebenen Steuerungsprogramm die Kalibrierstrahler auf unterschiedliche Temperaturen bringen, z. B. indem der eine Strahler erwärmt und der andere gekühlt werden.

Dabei kann gemäß einem Ausführungsbeispiel auch vorgesehen sein, dass die unterschiedlichen Temperaturen von einem Benutzer oder einer Bedienperson über eine Schnittestelle des Steuerungsprogramms gewählt und eingestellt werden.

Gemäß einem Ausführungsbeispiel ist das Steuerungsmodul ausgebildet, folgende Steuerungsschritte auszuführen:
Erwärmen und/oder Kühlen des ersten und des zweiten Kalibrierstrahlers, so dass diese unterschiedliche Temperaturen aufweisen:
Ausrichten der Wärmebildkamera auf den ersten Kalibrierstrahler und Aufnehmen eines Bildes des ersten Kalibrierstrahlers;
Ausrichten der Wärmebildkamera auf den zweiten Kalibrierstrahler und Aufnehmen eines Bildes des zweiten Kalibrierstrahlers.

Auf diese Weise kann eine automatische Ausführung des Kalibrierungsvorganges implementiert werden.

Gemäß einem Ausführungsbeispiel ist das Steuerungsmodul ausgebildet, folgende Steuerungsschritte auszuführen, um zwei an der Vorrichtung befestigte Wärmebildkameras zu kalibrieren:
Ausrichten der ersten Wärmebildkamera auf den ersten Kalibrierstrahler und Aufnehmen eines Bildes des ersten Kalibrierstrahlers durch die erste Wärmebildkamera, sowie gleichzeitiges Ausrichten der zweiten Wärmebildkamera auf den zweiten Kalibrierstrahler und Aufnehmen eines Bildes des zweiten Kalibrierstrahlers durch die zweite Wärmebildkamera;
Ausrichten der zweiten Wärmebildkamera auf den ersten Kalibrierstrahler und Aufnehmen eines Bildes des ersten Kalibrierstrahlers durch die zweite Wärmebildkamera, sowie gleichzeitiges Ausrichten der ersten Wärmebildkamera auf den zweiten Kalibrierstrahler und Aufnehmen eines Bildes des zweiten Kalibrierstrahlers durch die erste Wärmebildkamera.

Auf diese Weise kann eine automatische Ausführung des gleichzeitigen Kalibrierungsvorganges für zwei Kameras implementiert werden.

Gemäß einem Ausführungsbeispiel wird Verfahren zum Abgleich mindestens einer Wärmebildkamera geschaffen, wobei das Verfahren aufweist:
Regelung der Temperatur eines ersten und eines zweiten Kalibrierstrahler derart, dass sie gleichzeitig unterschiedliche Temperaturen aufweisen,
Bewegen der an einem Befestigungsmodul beweglich befestigten Wärmebildkamera derart, dass die Kamera zunächst auf den ersten und dann auf den zweiten Kalibrierstrahler ausgerichtet wird, um jeweils ein Bild der auf unterschiedliche Temperatur gebrachten Temperaturstrahler zum Abgleich der Wärmebildkamera aufzunehmen.

Gemäß einem Ausführungsbeispiel wird ein Computerprogramm geschaffen, aufweisend Computerprogrammcode der, wenn er auf einem Computer ausgeführt wird, diesen in die Lage versetzt, ein Verfahren gemäß einem der Ausführungsbeispiele durchzuführen.

Nachfolgend wird die Erfindung anhand von Ausführungsbeispielen im Detail beschrieben.

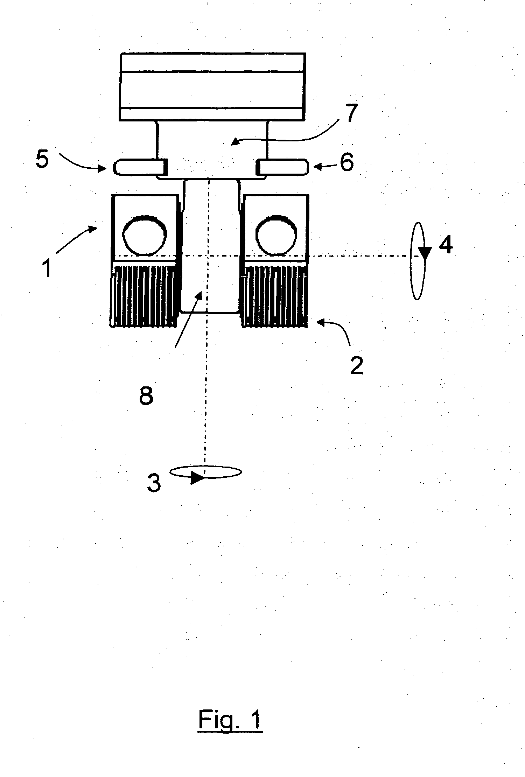

Dabei zeigt Fig. 1 eine Vorrichtung zur Kalibrierung einer Wärmebildkamera gemäß einem Ausführungsbeispiel der Erfindung.

Gemäß einem Ausführungsbeispiel sind an einer nicht beweglichen Halterung bzw. Plattform 7 zwei Wärmebildkameras 1 und 2 befestigt. Die Befestigung der Kameras an der nicht beweglichen Plattform 7 erfolgt dabei mittels eines sich von der Plattform **7** nach unten erstreckenden Befestigungs- oder Montierungsmoduls **8,** das eine Befestigung oder Montierung der Kameras in azimutaler Montierung ermöglicht, so dass sie in Elevations- und Azimut-Richtung drehbar sind, angedeutet durch die Pfeile 3 und 4 in Fig. 1.

Gemäß dem Ausführungsbeispiel der Erfindung wird die zum Abgleichen notwendige Zeit verkürzt, indem zwei Kalibrierstrahler **5** u. **6** für beide Wärmebildkameras vorgesehen werden. Die Kalibrierstrahler sind dabei an dem fest stehenden, nicht beweglichen Teil **7** der Plattform angebracht.

Zum Abgleichen werden nun die Wärmebildkameras durch Drehung in Elevations-Richtung senkrecht nach oben gestellt. Der Kalibrierstrahler **5** liegt dann im Sichtbereich von Wärmebildkamera **1** und der Kalibrierstrahler **6** liegt dann im Sichtbereich der Wärmebildkamera **2.** Jeweils ein Kalibrierstrahler wird auf die kalte Temperatur eingestellt, der andere Kalibrierstrahler wird auf die warme Temperatur eingestellt. Nachdem die Wärmebildkameras ihr Referenzbild aufgenommen haben, wird der in Azimut-Richtung bewegliche Teil der Plattform mit den beiden Kameras um 180° um die Azimutachse **3** gedreht. Danach liegt der Kalibrierstrahler **5** im Sichtbereich der Wärmebildkamera **2** und der Kalibrierstrahler **6** im Sichtbereich der Wärmebildkamera **1.** Die Wärmebildkameras können dann sofort das Referenzbild mit der zweiten, unterschiedlichen Temperatur aufnehmen, ohne dass eine Temperaturänderung abgewartet werden muss. Der Abgleichvorgang kann dadurch auf die (wenigen) Sekunden reduziert werden, die notwendig sind, um die Referenzbilder aufzunehmen und die Wärmebildkameras entsprechend auszurichten.

Besonders vorteilhaft ist bei dem Ausführungsbeispiel gemäß Fig. 1, dass zwei Kameras vorgesehen sind und durch Vorsehen der ebenfalls zwei Kalibrierstrahler beide Kameras gleichzeitig kalibriert werden können, ohne dass eine Temperaturänderung der Kalibrierstrahler abgewartet werden muss.

Gemäß einem Ausführungsbeispiel erfolgt der Kalibrierungsvorgang ganz oder teilweise automatisch. Hierzu ist gemäß einem Ausführungsbeispiel eine Steuerungsvorrichtung vorgesehen, die sowohl die (beispielsweise) elektrische Heizung und Kühlung der Kalibrierstrahler wie auch die Bewegung der Kameras in Elevations-Azimut-Richtung steuert. Die Steuereinrichtung kann z. B. als Mikroprozessorsteuerung implementiert werden, die ggf. nach Eingabe bzw. von durch den Benutzer wählbaren Parametern wie Temperaturwerte für die warme und kalter Temperatur der Strahler 5 und 6 selbständig den Kalibrierungsvorgang durchführt.

Gemäß einem weiteren Ausführungsbeispiel ist lediglich eine Wärmebildkamera vorgesehen (z. B. nur die Wärmebildkamera 1). Auch bei diesem Ausführungsbeispiel sind jedoch zwei Kalibrierstrahler 5 und 6 vorgesehen. In diesem Fall kann dann ebenso wie im vorherigen Ausführungsbeispiel die Kalibrierungszeit verkürzt werden, indem die Kalibrierstrahler auf die für die Kalibrierung vorgesehenen unterschiedlichen Temperaturen gebracht werden und die Wärmebildkamera dann zunächst auf den einen der beiden Kalibrierstrahler zur Aufnahme eines ersten Bildes ausgerichtet wird, und dann auf den anderen zur Aufnahme eines zweiten Bildes.

## Patentansprüche

1. Vorrichtung zum Abgleich mindestens einer Wärmebildkamera (1; 2), wobei die Vorrichtung aufweist:
einen ersten und einen zweiten Kalibrierstrahler (5, 6), die so ausgebildet sind, dass sie gleichzeitig auf unterschiedliche Temperaturen gebracht werden können,
ein Befestigungsmodul (8), um die mindestens eine Wärmebildkamera (1; 2) an der Vorrichtung beweglich zu befestigen, wobei
das Befestigungsmodul (8) so zur beweglichen Befestigung der Wärmebildkamera (1; 2) ausgebildet ist, dass es ermöglicht, dass die Wärmebildkamera (1; 2) zunächst auf den ersten und dann auf den zweiten Kalibrierstrahler (5, 6) ausgerichtet wird, um jeweils ein Bild der auf unterschiedliche Temperatur gebrachten Kalibrierstrahler (5, 6) zum Abgleich der Wärmebildkamera (1, 2) aufzunehmen,
wobei das Befestigungsmodul (8) so ausgebildet ist, dass eine erste (1) und eine zweite Wärmebildkamera (2) beweglich an der Vorrichtung befestigbar sind, dann derart beweglich befestigt sind, dass die erste Wärmebildkamera (1) auf den ersten Kalibrierstrahler (5) ausrichtbar ist, während gleichzeitig die zweite Wärmebildkamera (2) auf den zweiten Kalibrierstrahler (6) ausrichtbar ist, sowie ferner derart befestigt sind, dass die erste Wärmebildkamera (1) auf den zweiten Kalibrierstrahler (6) ausrichtbar ist während gleichzeitig die zweite Wärmebildkamera (2) auf den ersten Kalibrierstrahler (1) ausrichtbar ist.

2. Vorrichtung nach Anspruch 1, ferner aufweisend:
ein Heizungs- und/oder ein Kühlmodul für mindestens einen, vorzugsweise für jeden der ersten und zweiten Kalibrierstrahler (5, 6), um die Kalibrierstrahler (5, 6) auf die für die Kalibrierung gewünschten unterschiedlichen Temperaturen zu bringen.

3. Vorrichtung nach Anspruch 1 oder 2, wobei
das Befestigungsmodul (8) als azimutale Montierung ausgebildet ist.

4. Vorrichtung nach einem der vorhergehenden Ansprüche, ferner aufweisend:
ein Steuerungsmodul zur Steuerung der Temperatur des ersten und des zweiten Kalibrierstrahlers (5, 6), wobei das Steuerungsmodul so ausgebildet ist, dass es den ersten und den zweiten Kalibrierstrahler (5, 6) so ansteuert, dass diese unterschiedliche Temperaturen aufweisen.

5. Vorrichtung nach Anspruch 4, wobei das Steuerungsmodul ausgebildet ist, folgende Steuerungsschritte auszuführen:
Erwärmen und/oder Kühlen des ersten und des zweiten Kalibrierstrahlers (5, 6), so dass diese unterschiedliche Temperaturen aufweisen:
Ausrichten der Wärmebildkamera (1; 2) auf den ersten Kalibrierstrahler (5) und Aufnehmen eines Bildes des ersten Kalibrierstrahlers (5);
Ausrichten der Wärmebildkamera (1; 2) auf den zweiten Kalibrierstrahler (6) und Aufnehmen eines Bildes des zweiten Kalibrierstrahlers (6).

6. Vorrichtung nach Anspruch 5, wobei das Steuerungsmodul ausgebildet ist, folgende Steuerungsschritte auszuführen, um die zwei an der Vorrichtung befestigten Wärmebildkameras (1, 2) zu kalibrieren:
Ausrichten der ersten Wärmebildkamera (1) auf den ersten Kalibrierstrahler (5) und Aufnehmen eines Bildes des ersten Kalibrierstrahlers (5) durch die erste Wärmebildkamera (1), sowie gleichzeitiges Ausrichten der zweiten Wärmebildkamera (2) auf den zweiten Kalibrierstrahler (6) und Aufnehmen eines Bildes des zweiten Kalibrierstrahlers (6) durch die zweite Wärmebildkamera (2); und
Ausrichten der zweiten Wärmebildkamera (2) auf den ersten Kalibrierstrahler (5) und Aufnehmen eines Bildes des ersten Kalibrierstrahlers (5) durch die zweite Wärmebildkamera (2), sowie gleichzeitiges Ausrichten der ersten Wärmebildkamera (1) auf den zweiten Kalibrierstrahler (6) und Aufnehmen eines Bildes des zweiten Kalibrierstrahlers (6) durch die erste Wärmebildkamera (1).

7. Verfahren zum Abgleich mindestens einer Wärmebildkamera (1; 2), wobei das Verfahren aufweist:
Regelung der Temperatur eines ersten und eines zweiten Kalibrierstrahlers (5, 6) derart, dass sie gleichzeitig unterschiedliche Temperaturen aufweisen,
Bewegen der an einem Befestigungsmodul (8) beweglich befestigten Wärmebildkamera (1; 2) derart, dass die Wärmebildkamera (1; 2) zunächst auf den ersten und dann auf den zweiten Kalibrierstrahler (5, 6) ausgerichtet wird, um jeweils ein Bild der auf unterschiedliche Temperatur gebrachten Kalibrierstrahler (5, 6) zum Abgleich der Wärmebildkamera (1; 2) aufzunehmen,
wobei das Bewegen aufweist:
Bewegen einer an dem Befestigungsmodul (8) beweglich befestigten ersten Wärmebildkamera (1) derart, dass die erste Wärmebildkamera (1) auf den ersten Kalibrierstrahler (5) ausgerichtet wird, während gleichzeitig eine an dem Befestigungsmodul (8) beweglich befestigte zweite Wärmebildkamera (2) auf den zweiten Kalibrierstrahler (6) ausgerichtet wird, und
Bewegen der ersten Wärmebildkamera (1) derart, dass die erste Wärmebildkamera (1) auf den zweiten Kalibrierstrahler (6) ausgerichtet wird, während gleichzeitig die zweite Wärmebildkamera (2) auf den ersten Kalibrierstrahler (5) ausgerichtet wird.

8. Computerprogramm, aufweisend Computerprogrammcode der, wenn er auf einem Computer ausgeführt wird, diesen in die Lage versetzt, ein Verfahren gemäß Anspruch 7 durchzuführen.

## Claims

1. Apparatus for calibrating at least one heat image camera (1; 2), wherein said apparatus comprises:
A first and a second calibrating radiator (5, 6), which are configured such that they can be brought to different temperatures at the same time,
a mounting module (8) for mounting said heat image camera (1; 2) movably at said apparatus, wherein
said mounting module (8) is configured for movably mounting said heat image camera (1; 2) in such a way that it is enabled that the heat image camera (1; 2) is at first directed to said first and then to said second calibrating radiator (5, 6) to take an image of the calibrating radiators (5, 6), which have been brought to different temperatures, to calibrate said heat image camera (1, 2),
wherein said mounting module (8) is configured such that a first (1) and a second heat image camera (2) are movably mountable to said apparatus, then are movably mounted such that said first heat image camera (1) is directable to said first calibrating radiator (5), while at the same time the second heat image camera (2) is directable to said second calibrating radiator (6), and further being mounted such that the first heat image camera (1) is directable to said second calibrating radiator (6) while at the same time the second heat image camera (2) is directable to said first calibrating radiator (1).

2. The apparatus according to claim 1, further comprising:
A heating and/or cooling module for at least one, preferably for each of said first and second calibrating radiators (5, 6) to bring said calibrating radiators (5, 6) to the different temperatures desired for the calibrating.

3. The apparatus of claim 1 or 2, wherein
the mounting module (8) is configured as an azimuth mounting.

4. The apparatus according to one of the preceding claims, further comprising:
A controlling module for controlling the temperature of said first and said second calibrating radiators (5, 6), wherein said controlling module is configured such that it controls said first and second calibrating radiators (5, 6) such that they have different temperatures.

5. The apparatus of claim 4, wherein said controlling module is configured such that it performs the following controlling steps:
Heating and/or cooling said first and said second calibrating radiators (5, 6) such that they have different temperatures;
directing said heat image camera (1; 2) to said first calibrating radiator (5) and taking an image of said first calibrating radiator (5);
directing said heat image camera (1; 2) to said second calibrating radiator (6) and taking an image of said second calibrating radiator (6).

6. The apparatus of claim 5, wherein said controlling module is configured such that is performs the following controlling steps to calibrate the two heat image cameras (1, 2) mounted at said apparatus:
Directing the first heat image camera (1) to the first calibrating radiator (5) and taking an image of said first calibrating radiator (5) by said first heat image camera (1), while at the same time directing the second heat image camera (2) to said second calibrating radiator (6) and taking an image of said second calibrating radiator (6) by said second heat image camera (2); and
directing the second heat image camera (2) to said first calibrating radiator (5) and taking an image of said calibrating radiator (5) by said second heat image camera (2), while at the same time directing said first heat image camera (1) to said second calibrating radiator (6) and taking an image of said second calibrating radiator (6) by said first heat image camera (1).

7. Method for calibrating at least one heat image camera (1; 2), said method comprising:
Controlling the temperature of a first and a second calibrating radiator (5, 6) in such a way that they at the same time have different temperatures,
moving the heat image camera (1; 2) movably mounted to a mounting module (8) in such a way that the heat image camera (1; 2) at first is directed to a first and then to a second calibrating radiator (5, 6), to respectively take an image of the calibrating radiators (5, 6), which have been brought to different temperatures, to calibrate the heat image camera (1; 2),
while the moving comprises:
Moving a first heat image camera (1) mounted movably to the mounting module (8) in such a way that the first heat image camera (1) is directed to the first calibrating radiator (5), while at the same time a second heat image camera (2) movably mounted to said mounting module (8) is directed to said second calibrating radiator (6), and
moving said first heat image camera (1) in such a way that said first heat image camera (1) is directed to said second calibrating radiator (6), while said second heat image camera (2) is directed to said first calibrating radiator (5).

8. Computer program, comprising computer program code, which, when being executed on a computer, enables said computer to carry out a method according to claim 7.

## Revendications

1. Dispositif d'étalonnage d'au moins une caméra thermique (1 ; 2), le dispositif présentant :
une première et une deuxième source d'étalonnage (5, 6) qui sont constituées de telle sorte qu'elles peuvent être amenées simultanément à différentes températures,
un module de fixation (8) pour fixer de façon mobile sur le dispositif l'au moins une caméra thermique (1 ; 2),
le module de fixation (8) étant constitué pour la fixation de façon mobile de la caméra thermique (1 ; 2) de telle sorte qu'il permet que la caméra thermique (1 ; 2) soit orientée d'abord vers la première source d'étalonnage puis vers la deuxième source d'étalonnage (5, 6) afin de capter respectivement une image des sources d'étalonnage (5, 6) amenées à une température différente pour l'étalonnage de la caméra thermique (1 ; 2),
le module de fixation (8) étant constitué de telle sorte qu'une première caméra thermique (1) et une deuxième caméra thermique (2) peuvent être fixées de façon mobile sur le dispositif, puis sont fixées de façon mobile de telle sorte que la première caméra thermique (1) peut être orientée vers la première source d'étalonnage (5) tandis que simultanément la deuxième caméra thermique (2) peut être orientée vers la deuxième source d'étalonnage (6), et sont en outre fixées de telle sorte que la première caméra thermique (1) peut être orientée vers la deuxième source d'étalonnage (6) tandis que simultanément la deuxième caméra thermique (2) peut être orientée vers la première source d'étalonnage (5).

2. Dispositif selon la revendication 1, présentant également :
un module de chauffage et/ou de refroidissement pour au moins une source d'étalonnage, de préférence pour chacune de la première et de la deuxième source d'étalonnage (5, 6), afin d'amener les sources d'étalonnage (5, 6) aux températures différentes souhaitées pour l'étalonnage.

3. Dispositif selon la revendication 1 ou 2,
le module de fixation (8) étant constitué en tant que monture azimutale.

4. Dispositif selon une des revendications précédentes, présentant également :
un module de commande pour la commande de la température de la première et de la deuxième source d'étalonnage (5, 6), le module de commande étant constitué de telle sorte qu'il pilote la première et la deuxième source d'étalonnage (5, 6) de telle sorte que celles-ci présentent des températures différentes.

5. Dispositif selon la revendication 4, le module de commande étant constitué pour exécuter les étapes de commande suivantes :
chauffage et/ou refroidissement de la première et de la deuxième source d'étalonnage (5, 6) de telle sorte que celles-ci présentent différentes températures :
orientation de la caméra thermique (1 ; 2) vers la première source d'étalonnage (5) et capture d'une image de la première source d'étalonnage (5) ;
orientation de la caméra thermique (1 ; 2) vers la deuxième source d'étalonnage (6) et capture d'une image de la deuxième source d'étalonnage (6).

6. Dispositif selon la revendication 5, le module de commande étant constitué pour exécuter les étapes de commande suivantes pour étalonner les deux caméras thermiques (1 ; 2) fixées sur le dispositif :
orientation de la première caméra thermique (1) vers la première source d'étalonnage (5) et capture d'une image de la première source d'étalonnage (5) par la première caméra thermique (1), ainsi qu'orientation simultanée de la deuxième caméra thermique (2) vers la deuxième source d'étalonnage (6) et capture d'une image de la deuxième source d'étalonnage (6) par la deuxième caméra thermique (2) ; et
orientation de la deuxième caméra thermique (2) vers la première source d'étalonnage (5) et capture d'une image de la première source d'étalonnage (5) par la deuxième caméra thermique (2), ainsi qu'orientation simultanée de la première caméra thermique (1) vers la deuxième source d'étalonnage (6) et capture d'une image de la deuxième source d'étalonnage (6) par la première caméra thermique (1).

7. Procédé d'étalonnage d'au moins une caméra thermique (1 ; 2), le procédé présentant :
la régulation de la température d'une première et d'une deuxième source d'étalonnage (5, 6) de telle sorte qu'elles présentent simultanément des températures différentes,
le déplacement de la caméra thermique (1 ; 2) fixée de façon mobile sur un module de fixation (8) de telle sorte que la caméra thermique (1 ; 2) est orientée d'abord vers la première et puis vers la source d'étalonnage (5, 6) pour capter respectivement une image des sources d'étalonnage (5, 6) amenées à une température différente en vue de l'étalonnage de la caméra thermique (1 ; 2),
le déplacement présentant :
le déplacement d'une première caméra thermique (1) fixée de façon mobile sur le module de fixation (8) de telle sorte que la première caméra thermique (1) est orientée vers la première source d'étalonnage (5) tandis que simultanément une deuxième caméra thermique (2) fixée de façon mobile sur le module de fixation (8) est orientée vers la deuxième source d'étalonnage (6), et
le déplacement de la première caméra thermique (1) de telle sorte que la première caméra thermique (1) est orientée vers la deuxième source d'étalonnage (6) tandis que simultanément la deuxième caméra thermique (2) est orientée vers la première source d'étalonnage (5).

8. Programme d'ordinateur, présentant un code de programme d'ordinateur qui, quand il est exécuté sur un ordinateur, met celui-ci en mesure de réaliser un procédé selon la revendication 7.
